# EUROPÄISCHE PATENTSCHRIFT

(11) **EP 0 308 769 B1**
(45) Veröffentlichungstag und Bekanntmachung des Hinweises auf die Patenterteilung: **13.12.1995**
(21) Anmeldenummer: 88114911.6
(22) Anmeldetag: 13.09.1988
(51) Int. Cl.: C08J 9/42, C08L 13/02, C08K 3/38

(54) **Verfahren zur Herstellung von schwerentflammbaren Polyurethanschaumstoffen**
Process for preparing difficultly inflammable polyurethane foams
Procédé pour préparer des mousses de polyuréthanes difficilement inflammables

(30) Priorität: 24.09.1987 DE 3732239; 24.09.1987 DE 3732199
(43) Veröffentlichungstag der Anmeldung: 29.03.1989
(73) Patentinhaber: METZELER SCHAUM GMBH, 87700 Memmingen (DE)
(72) Erfinder: Nonnenbruch, Heinz-Gerd, D-5090 Leverkusen 1 (DE); Heitmann, Ulrich, Dr., D-8940 Memmingen (DE); Bormann, Heinrich, Dr., D-4047 Dormagen (DE)
(74) Vertreter: Preissner, Nicolaus, Dipl.-Ing.

(56) Entgegenhaltungen:
- EP-A- 0 002 458
- DE-A- 2 105 443
- US-A- 3 718 615
- DATABASE WPIL (DERWENT), Nr. 81-55729D(31), Derwent Publications Ltd, London, GB; & JP-A-56 069 717

## Beschreibung

Die Erfindung betrifft ein Verfahren zur Herstellung von schwerentflammbaren Polyurethanschaumstoffen durch Imprägnierungen mit einer Mischung aus einem Carboxylgruppen-haltigen Polychloroprenlatex, einem Zinksalz einer Polymetaborsäure und gegebenenfalls Aluminiumhydroxid.

Es ist bereits bekannt, die Entflammbarkeit von Schaumstoffen durch Behandeln mit vulkanisierbaren Elastomerlatices herabzusetzen. Die Vulkanisation erfolgt in üblicher Weise mit Schwefel unter Zusatz der bekannten schwefelhaltigen Vulkanisationsbeschleuniger. Nachteilig ist die verhältnismäßig lange Vulkanisationsdauer bei hoher Vulkanisationstemperatur, die zu einer Beeinträchtigung der Eigenschaften des Schaumstoffs führen kann. Es hat sich auch gezeigt, daß die Verringerung der Entflammbarkeit durch schwefelvernetzte Elastomerlatices nicht in allen Fällen zufriedenstellend ist.

In der DOS 2 649 222 wird ein Verfahren vorgeschlagen, bei dem anorganische flammhemmende Zusätze wie Magnesiumcarbonat oder Aluminiumoxidhydrat mit Hilfe von Elastomerlatices in eine Schaumstoff eingebracht werden, um ihn schwerer entflammbar zu machen. Auch bei diesem Verfahren werden nach der Imprägnierung des Schaumstoffs die Latices mit Schwefel vernetzt, was mit den oben erwähnten Nachteilen verbunden ist.

Ein flammhemmend ausgerüsteter Schaumstoff ist auch aus der US-PS 4 439 472 bekannt. Dabei wird als Bindersystem Chloroprenlatex und als Feststoff im wesentlichen Aluminumoxid-Hydrat verwendet.

Dieses Aluminium-Hydroxid bewirkt zwar bei entsprechender Beladung einen relativ guten Brandschutz, hat jedoch den Nachteil, im Brandfall eine hohe Rauchgasdichte zu bewirken. Darüberhinaus wird aus dem Chloroprenlatex in erheblicher Menge Salzsäure abgespaltet. Beide Erscheinungen sind sehr nachteilig bei der Verwendung derartiger flammhemmend ausgerüsteter Schaumstoffe als Polster in öffentlichen Verkehrsmitteln, insbesondere bei der Verwendung in Fluggastsitzen von Flugzeugen. Nach der Prüfbestimmung ATS 1000.001 dürfen nämlich bei einem Brandfall in der Kabine eines Flugzeuges unter anderem die Rauchgasdichte sowie die entstehenden giftigen Gase bestimmte Werte nicht überschreiten, um noch ausreichend Zeit für die Flucht der gefährdeten Passagiere zu gewährleisten.

Der Erfindung liegt daher die Aufgabe zugrunde, ein Verfahren anzugeben, mit dem ein Schaumstoff geschaffen werden kann, der neben einem optimalen Brandverhalten zumindest in der Anfangsphase erheblich weniger Rauchgase und giftige Gase entwickelt und der darüberhinaus trotz der erforderlichen Tränkung hohe Elastizitätswerte beibehält.

Es wurde nun gefunden, daß schwer entflammbare Polyurethanschaumstoffe erhalten werden, wenn diese mit einer Mischung aus einem Carboxylgruppen-haltigen Polychloroprenlatex, einem Zinksalz einer Polymetaborsäure und gegebenenfalls Aluminiumhydroxid imprägniert werden.

Gegenstand der Erfindung ist ein Verfahren zur Herstellung von schwerentflammbaren Polyurethanschaumstoffen durch Imprägnieren mit einer Mischung aus einem vernetzbaren Elastomerlatex und einem flammhemmenden Additiv, dadurch gekennzeichnet, daß man einen offenzelligen Polyurethanschaumstoff mit einer Mischung aus einem Carboxylgruppen-haltigen Polychloroprenlatex, einem Zinksalz einer Polymetaborsäure und gegebenenfalls Aluminiumhydroxid imprägniert.

Erfindungsgemäß bevorzugte Ausführungsformen sind dadurch gekennzeichnet,
- daß man einen offenzelligen Polyurethanschaumstoff mit einer Porenzahl von 10-14/cm, einer Luftdurchlässigkeit von 50-150 l/min (gemessen über eine Fläche von 100 cm² bei einer Dicke von 5 cm und einem Druckabfall von 10 Pa) und einem Raumgewicht von 18-60 kg/m³ imprägniert,
- daß vor dem Imprägnieren der Latex mit Zinkoxid als Vernetzer versetzt worden ist,
- daß als Zinksalz Trizinktetraborat-Pentahydrat verwendet wird,
- daß als Zinksalz Tetrazinkdodecaborat-Heptahydrat verwendet wird,
- daß Polychloropren mit 2 bis 6 Mol-% einpolymerisierten Einheiten von Acrylsäure oder Methacrylsäure verwendet wird,
- daß das Zinksalz zu bis zu 50 Gew.-% durch Aluminium-Hydroxid ersetzt wird,
- daß das Gew.-Verhältnis Polychloroprenlatex zu Zinksalz 1:1 bis 1:10, insbesondere 1:2 bis 1:4, beträgt,
- daß der Chloroprenlatex mit dem Zinksalz als Feststoff in einer Menge von 50-500 Gew.-%, bezogen auf die ausgangsrohdichte des Schaumstoffs, verwendet wird.

Die Erfindung betrifft auch die Verwendung der erhaltenen Polyurethanschaumstoffe bei der Herstellung von Fahrzeug- und Flugzeugsitzen.

Es ist zwar aus der internationalen Patentanmeldung WO 87/00852 ein flammhemmendes Oberflächen-Beschichtungsmittel bekannt, das im wesentlichen aus einer Mischung einer flüssigen Emulsion aus Ethylenvinylchlorid-Polymer und einem Zinkboratpulver und/oder Aluminiumhydrat besteht. Ein derartiges Beschichtungsmittel bietet zwar zunächst einen guten Oberflächenschutz bei einer auf diese Oberfläche einwirkenden Zündquelle; da bei höheren Temperaturen das als Binder verwendete Ethylenvinylchlorid-Polymer aber selbst brennt, bietet es dann nur einen unzureichenden Schutz für das darunterliegende unbehandelte, normal brennbare Material, so daß dieses selbst schmilzt und brennt. Darüberhinaus bildet sich im Brandfall bei Verwendung dieses Binders nur einunzureichendes Carbongerüst, so daß damit ein Abschmelzen ebenfalls nur schlecht verhindert wird. Selbst aber, wenn man dieses Beschichtungsmittel zur Tränkung von Schaumstoff verwenden würde, würde sich neben der schlechteren Brandresistenz ebenfalls eine erhebliche Verschlechterung der physikalischen Werte des so behandelten Schaumstoffs, insbesondere des Druckverformungsrestes, ergeben, so daß ein so behandelter Schaumstoff praktisch nicht mehr als Polstermaterial eingesetzt werden kann.

Erst die Tränkung eines bei der Trocknung nachvernetzenden Chloroprenlatex und spezieller Zinksalze mit geringem Kristallwassergehalt bieten neben einem optischen Brandschutz auch die Gewährleistung hoher physikalischer Werte, die die Dauergebrauchseigenschaft des so behandelten Schaumstoffs nicht herabsetzen.

Insbesondere durch die Verwendung der genannten Zinksalze ergibt sich primär eine Verbesserung des flammhemmenden Verhaltens des Schaumstoffes bei kleinen und großen Zündquellen, wie nachstehend noch im einzelnen ausgeführt wird.

Eine wesentliche Grundvoraussetzung für die Funktionsweise des erfindungsgemäßen Verfahrens ist jedoch die Offenzelligkeit des verwendeten Schaumstoffs mit einer extrem gleichmäßigen Zellstruktur und möglichst gleichgroßen Zellen, vorzugsweise 10-14 Poren pro cm und vorzugsweise mit einer Luftdurchlässigkeit von 50-150 l/min, wobei die Luftdurchlässigkeit an einem Probestück von 1 dm² Fläche und 5 cm Dicke bei einer Druckdifferenze von 10 Pa gemessen wurde. Bei einem solchen Schaumstoff werden damit die Zellstege und Zellwände homogen mit dem im als Binder fungierenden Chloroprenlatex enthaltenden Feststoffen umhüllt bzw. beschichtet, wobei trotz einer erheblichen Tränkmenge - bezogen auf das Rohgewicht des Schaumstoffs - die Offenzelligkeit voll erhalten bleibt.

Durch die an die Oberfläche der Schaumstoffmatrix angelagerten Feststoffe und dadurch bedinger Veränderung des Pyrolyseverhaltens des Schaumstoffs wird dieser beim Auftreten eines Brandes und großer Hitzeeinwirkung nicht mehr schmelzen und abtropfen, wobei im allgemeinen eine derartige Schmelze besonders leicht brennt, sondern es bildet sich ein stabilies Carbongerüst, das einmal dieses Abschmelzn verhindert und zum anderen das dahinterliegende Material länger schützt. Dieses Carbongerüst ist relativ stabil und bricht auch bei längerer Flammeinwirkung nicht zusammen; es ist auch erheblich stabiler als das bei alleiniger Verwendung von Aluminiumoxidhydrat sehr schnell entstehende Mineralgerüst. Das Entstehen dieses stabilen, mit Mineralien durchsetzten Carbongerüstes läßt sich ferner bei der Verwendung der genannten Zinksalze auch mit erheblich geringeren Tränkgehalten erreichen.

Einen weiteren wesentlichen Vorteil bringt der als Binder verwendete carboxylierte Chloroprenlatex, der bei entsprechend sorgfältiger Temperaturführung bei der Trocknung des getränkten Schaumstoffs vollständig nachvernetzt und dabei im Zusammenwirken mit der sehr gleichmäßigen Zellstruktur des Schaumstoffs bewirkt, daß die charakteristischen Werte der Schaumstoffmatrix, wie Elastizität, Stauchhärte, Zugfestigkeit, Dauergebrauchstest und Druckverformungsrest sich gegenüber den Werten der ursprünglichen Schaumstoffmatrix nur geringfügig verändern, sich bei einer Reihe der erheblichen Flammschutzwirkung des Tränkmaterials auch spezifische Materialeigenschaften, die die Gebrauchstüchtigkeit verbessern und die Anwendungsmöglichkeiten erhöhen, erheblich gesteigert werden.

Parallel zur Verbesserung des Flammschutzverhaltens und der Erzielung optimaler physikalischer Werte kommt es auch noch zu einer Verbesserung des Rauchgasverhaltens, das im starken Maße mit dem veränderten Carbonisierungsverlaufs der getränkten Schaumstoffmatrix zusammenhängt.

Dabei hat sich insbesondere gezeigt, daß bei Verwendung der genannten Zinksalze der sog. Abfangspeak der Rauchgesentwicklung beim Start der Einwirkung großer Zündquellen stark zurückgedrängt wird und daß sich eine grundsätzliche zeitliche Verzögerung der Rauchgasentwicklung ergibt. Es tritt vielmehr eine gleichmäßige Rauchgasdichte auf erniedrigtem Niveau ein, wobei Messungen nach ATS 1000.001 eine Halbierung der Rauchgasdichte gegenüber der Verwendung von Aluminmiumoxid-Hydrat ergeben haben.

Diese letzte Erscheinung ist insbesondere in Fluggastzellen von Flugzeugen von Bedeutung, da bei dem Auftreten eines Brandes durch die üblicherweise auftretende starke Rauchentwicklung den Passagieren sehr schnell den Fluchtweg abgeschnitten war, weil die Kabine wie ein dichter undurchsichtiger Nebel mit Rauch gefüllt war. Wenn es dagegen möglich ist, einmal die Rauchgasdichte zu verringern und insbesondere den Zeitpunkt des Entstehens dieser Rauchgase auch nur um wenige Minuten hinauszuzögern, so ergibt sich dadurch eine erhebliche Verbesserung der Fluchtmöglichkeit der Passagiere.

Darüberhinaus hat es sich gezeigt, daß nach Verlöschen der Flamme eine weitere Rauchgasentwicklung weitgehend unterbleibt. Das bedeutet, daß im Gegensatz zu unbehandeltem Schaumstoff, bei dem auch nach Erlöschen einer sichtbaren Flamme noch über einen längeren Zeitraum dichter Rauch aufsteigt und damit die Sicht weiterhin zunehmend verschlechtert, bei einem erfindungsgemäß behandelten Schaumstoff die schon im Brandfall stark verminderte und insbesondere später einsetzende Rauchgasentwicklung nach Verlöschen der Flamme nicht weiter ansteigt, wodurch die Sichtverhältnisse und damit die Fluchtmöglichkeiten erheblich verbessert werden.

Aber auch die Entwicklung von Salzsäure, insbesondere aus dem Chloroprenlatex bei dessen Verwendung als Binder, wird stark zurückgedrängt, wie noch später erläutert wird.

Als anorganischer Feststoff hat sich insbesondere die Verwendung von Tetrazinkdodecarborat-Heptahydrat in der Form von 2 ZnO · 3 B₂O₃ · 3,5 H₂O als besonders vorteilhaft erwiesen, da dieses den geringsten Kristallwassergehalt und den höchsten B₂O₃-Gehalt aufweist.

Dabei haben sich insbesondere folgende Effekte bei entsprechenden Brandversuchen gezeigt:
Die Kristallwasserabspaltung erfolgt ab 250°C.

Es fällt feindisperses Zinkoxid aus, das hervorragend als Absorber für die Salzsäure wirkt.

Durch das B₂O₃ erfolgt in den Polyurethan-Gerüsten eine Dehydratisierung anstelle einer Ausbildung von Pyrolysegasen.

Die Schmelz- und Sinterneigung des die Zellstrukturen des Schaumstoffs umhüllenden B₂O₃ und des noch nicht zersetzten Zinkborats auf den Oberflächen der Zellstrukturen des Schaumstoffs zeigt folgende Effekte: Durch ein Schmelzen der Borsäure bei etwa 400°C spaltet sich Wasser ab, das eine Kühlung bewirkt, und zum anderen umhüllt die Borsäure die Zellstege der Schaumstoffmatrix und verhindert damit einen Sauerstoffzutritt, so daß die Zellstege nicht brennen. Oberhalb von 800°C schmilzt dann das reine Zinkborat, wodurch die Verbrennung des die stehenbleibenden Zellstege bildenden Carbongerüstes erheblich länger dauert.

Die zu imprägnierenden offenzelligen Polyurethanschaumstoffe werden in an sich bekannter Weise aus folgenden Komponenten erhalten:
1. Polyisocyanten, wie sie z.B. von W. Siefken in Justus Liebigs Annalen der Chemie, 562, Seiten 75 bis 136, beschrieben werden, beispielsweise solche der Formel

   Q (NCO)ₙ

   in der vorzugsweise
   - n =: 2-4, vorzugsweise 2, und
   - Q: einen aliphatischen Kohlenwasserstoffrest mit 2-18, vorzugsweise 6-10 C Atomen,
   einen cycloaliphatischen Kohlenwasserstoffrest mit 4-15, vorzugsweise 5-10 C-Atomen,
   einen araliphatischen Kohlenwasserstoffrest mit 8-15, vorzugsweise 8-13 C-Atomen,
   vorzugsweise aber
   einen aromatischen Kohlenwasserstoffrest mit 6-15, vorzugsweise 6-13 C-Atomen
   bedeutet,
   z.B. 1,3- und 1,4-Phenylendiisocyanat, 2,4- und 2,6-Toluylendiisocyanat sowie beliebige Gemische dieser Isomeren, Diphenylmethan-2,4′- und/oder - 4,4′-diisocyanat oder Naphthylen-1,5-diisocyanat.
   Ferner kommen beispielsweise erfindungsgemäß in Frage:
   Triphenylmethan-4,4′,4˝-triisocyanat, Polyphenylpolymethylen-Polyisocyanate, wie sich durch Anilin-Formaldehyd-Kondensation und anschließende Phosgenierung erhalten und z.B. in den GB-PS 874 430 und 848 671 beschrieben werden.
   Es ist auch möglich, die bei der technischen Isocyanatherstellung anfallenden Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.
   Besonders bevorzugt werden in der Regel die technisch leicht zugänglichen aromatischen Polyisocyanate, z.B. das 2,4- und 2,6-Toluylendiisocyanat sowie beliebige Gemische dieser Isomeren ("TDI"), Polyphenyl-polymethylen- polyisocyanate, wie sie durch Anilin-Formaldehyd-Kondensation und anschließende Phosgenierung hergestellt werden ("rohes MDI) und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), die sich vom 2,4- und/oder 2,6-Toluylendiisocyanat bzw. vom 4,4′- und/oder 2,4′-Diphenylmethandiisocyanat ableiten.
2. Ausgangskomponenten sind ferner Verbindungen mit mindestens zwei gegenüber Isocyanaten reaktionsfähigen Wasserstoffatomen von einem Molekulargewicht in der der Regel von 400 - 10.000. Hierunter versteht man neben Aminogruppen, Thiolgruppen oder Carboxylgruppen aufweisenden Verbindungen vorzugsweise Hydroxylgruppen aufweisende Verbindungen, insbesondere zwei bis acht Hydroxylgruppen aufweisende Verbindungen, speziell solche vom Molekulargewicht 1000 bis 5000, vorzugsweise 800 bis 3000, z.B. mindestens zwei, in der Regel 2 bis 8, vorzugsweise aber 2 bis 4, Hydroxylgruppen aufweisende Polyester, Polyether, Polythioether, Polyacetale, Polycarbonate und Polyesteramide, wie sie für die Herstellung von homogenen und von zellförmigen Polyurethanen an sich bekannt sind, und wie sie z.B. in der DE- OS 3 430 285 auf den Seiten 10 -18 ausführlich beschrieben werden. Mischungen derartiger Verbindungen können verwendet werden.
3. Gegebenenfalls sind weitere Ausgangskomponenten Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8 vorzugsweise 2 bis 4, gegenüber Isocyanaten reaktionsfähige Wasserstoffatome auf.
   Auch in diesem Fall können Mischungen von verschiedenen Verbindungen mit mindestens zwei gegenüber Isocyanaten reaktionsfähigen Wasserstoffatomen mit einem Molekulargewicht von 32 bis 399 verwendet werden.
   Beispiele für derartige Verbindungen werden z.B. in der DE-OS 3 430 285 auf den Seiten 19 - 23 ausführlich beschrieben.
4. Als Treibmittel werden verwendet:
   Wasser und/oder leicht flüchtige anorganische oder organische Substanzen. Als organische Treibmittel kommen z.B. Aceton, Ethylacetat, halogensubstituierte Alkane wie Monofluortrichlormethan, Chlordifluormethan, Dichlordifluormethan; als anorganische Treibmittel z.B. Luft, CO₂ oder N₂O, in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azodicarbonamid oder Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510 beschrieben.
5. Gegebenenfalls werden als Hilfs- und Zusatzmittel mitverwendet:
   a) Katalysatoren der an sich bekannten Art, z.B. tertiäre Amine, wie Triethylamin, Tributylamin, N-Methylmorpholin, N-Ethyl-morpholin, N,N,N′,N′-Tetramethyl-ethylendiamin, Pentamethyl-diethylen-triamin und höhere Homologe (DE-OS 2 624 527 und 2 624 528), 1,4-Diazabicyclo-(2,2,2)-octan, N-Methyl-N′-dimethylaminoethylpiperazin, Bis-(dimethylaminoalkyl)piperazine, (DE-OS 2 636 787), N,N-Dimethylbenzylamin, N,N-Dimethylcyclohexylamin, N,N-Diethylbenzylamin, Bis-(N,N-diethylaminoethyl)adipat, N,N,N′N′-Tetramethyl-1,3-butandiamin, N,N-Dimethyl-β-phenylethylamin, 1,2-Dimethylimidazol, 2-Methylimidazol, monocyclische und bicyclische Amidine (DE-OS 1 720 633), Bis-(dialkylamino) alkyl-ether (US-PS 3 330 782, DE-AS 030 558, DE-OS 1 804 361 und 2 618 280) sowie Amidgruppen (vorzugsweise Formamidgruppen) aufweisende tertiäre Amine gemäß den DE-OS 2 523 633 und 2 732 292). Als Katalysatoren kommen auch an sich bekannte Mannischbasen aus sekundären Aminen, wie Dimethylamin, und Aldehyden, vorzugsweise Formaldehyd, oder Ketonen wie Aceton, und Phenolen in Frage.
      Gegenüber Isocyanatgruppen aktive Wasserstoffatome aufweisende tertiäre Amine als Katalysator sind z.B. Triethanolamin, Triisopropanolamin, N-Methyl-diethanolamin, N-Ethyl-Diethanolamin, N,N-Dimethyl- ethanolamin, deren Umsetzungsprodukte mit Alkylenoxiden wie Propylenoxid und/oder Ethylenoxid sowie sekundärtertiäre Amine gemäß DE-OS 2 732 292.
      Als Katalysatoren kommen ferner Silaamine mit Kohlenstoff-Silizium-Bindungen, wie sie z.B. in der DE-PS 1 229 290 (entsprechend der US-PS 3 620 984) beschrieben sind, in Frage, z.B. 2,2,4-Trimethyl-2-silamorpholin und 1,3-Diethylaminomethyl-tetramethyl-disiloxan.
      Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-OS 1 769 043), sowie Amidgruppen (vorzugsweise Formamidgruppen) aufweisende tertiäre Amine gemäß den DE-OS 2 523 633 und 2 732 292). Als Katalysatoren kommen auch an sich bekannte Mannischbasen aus sekundären Amine, wie Dimethylamin und Aldehyden, vorzugsweise Formaldehyd, oder Ketonen wie Aceton, und Phenolen in Frage.
      Erfindungsgemäß können auch organische Metallverbindungen, insbesondere organische Zinnverbindungen, als Katalysatoren, verwendet werden. Als organische Zinnverbindungen kommen neben schwefelhaltigen Verbindungen wie Di-n-octyl-zinn-mercaptid (DE-AS 1 769 367; US-PS 3 645 927) vorzugsweise Zinn(II)-salze von Carbonsäuren wie Zinn(II)-acetat, Zinn(II)-octoat, Zinn(II)-ethylhexoat und Zinn(II)-laurat und Zinn(IV)-Verbindungen, z.B. Dibutylzinndilaurat in Betracht.
      Selbstverständlich können alle obengenannten Katalysatoren als Gemische eingesetzt werden.
      Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.
      Die Katalysatoren werden in der Regel in einer Menge zwischen etwa 0,001 und 10 Gew.-%, bezogen auf die Menge an Polyisocyanat, eingesetzt.
   b) Oberflächenaktive Zusatzstoffe, wie Emulgatoren und Schaumstabilisatoren. Als Emulgatoren kommen z.B. die Natriumsalze von Ricinusölsulfonaten oder Salze von Fettsäuren mit Aminen wie ölsaures Diethylamin oder stearinsaures Diethanolamin infrage. Auch Alkali- oder Ammoniumsalze von Sulfonsäuren wie etwa von Dodecylbenzolsulfonsäure oder Dinaphthylmethandisulfonsäure oder von Fettsäuren wie Ricinolsäure oder von polymeren Fettsäuren können als oberflächenaktive Zusatzstoffe mitverwendet werden.
      Als Schaumstabilisatoren kommen vor allem Polyethersiloxane, speziell wasserlösliche Vertreter, infrage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in den US-PS 2 834 748, 2 917 480 und 3 629 308 beschrieben. Von besonderem Interesse sind vielfach über Allophanatgruppen verzweigte Polysiloxan-Polyoxyalkylen-Copolymere gemäß DE-OS 2 558 523.
   c) Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chlorethylphosphat, Dimethylmethanphosphonat, Trikresylphophat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.
      Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Die Reaktionskomponenten werden z.B. nach dem an sich bekannten Einstufenverfahren, dem Prepolymerverfahren oder dem Semiprepolymerverfahren, in der Regel bei Kennzahlen von 95 bis 130, zur Umsetzung gebracht, wobei man sich oft maschineller Einrichtungen bedient, z.B. solcher, die in der US- PS 2 764 565 beschrieben werden. Einzelheiten über Verarbeitunseinrichtungen, die auch erfindungsgemäß infrage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Die Mischung zur Imprägnierung des Polyurethanschaums, die aus einem Polychloroprenlatex durch Zugabe der obengenannten Bestandteile erhalten wird, liegt in Form einer Dispersion oder Suspension vor, mit einem Feststoffgehalt von 40 bis 80, vorzugsweise von 60 bis 70 Gew.-%. Die Menge der Mischung, mit der der zu imprägnierende Schaumstoff behandelt wird, richtet sich im wesentlichen nach den Anforderungen hinsichtlich des Brandverhaltens, die der behandelte Schaumstoff später erfüllen muß. Im allgemeinen wird der Schaumstoff mit einer solchen Menge, d.h. der 0,1- bis 8-fachen Menge, der Mischung behandelt, daß seine Feststoffaufnahme 10 bis 800 %, vorzugsweise 15 bis 450 %, des ursprünglichen Schaumstoffgewichts beträgt. Der Schaumstoff kann entweder vollständig oder teilweise, z.B. nur in der Oberfläche, imprägniert werden. Für eine vollständige Imprägnierung wird der Schaumstoff mit der Mischung getränkt, z.B. indem man ihn darin eintaucht und einen Überschuß der Mischung durch Abquetschen entfernt. Falls nur eine Imprägnierung der Oberfläche beabsichtigt ist, kann die Mischung auch durch Sprühen in den Schaumstoff eingebracht werden. Ferner ist eine Behandlung auch durch Beschichtung oder Einsaugen der Mischung mittels Ungerdruck möglich.

Nach der Behandlung wird die im Schaumstoff enthaltene Feuchtigkeit durch Trocknen bei erhöhter Temperatur entfernt und gleichzeitig das in den Schaumstoff eingebrachte Elastomere vernetzt. Es ist ein besonderer Vorteil des erfindungsgemäßen Verfahrens, daß die Vernetzung des Latex bereits bei den für die Trocknung ausreichenden Temperaturen erfolgt, d.h. innerhalb einer Zeit von 3 bis 10 Minuten bei einer ansteigenden Temperatur von etwa 70 bis 170°C und damit weniger Zeit benötigt als bei der bisher üblichen Schwefelvulkanisation. Die thermische Belastung des Schaumstoffs bei der Vernetzung kann dadurch sehr klein gehalten werden. Überraschenderweise wird für die Vernetzung nicht mehr, sondern weniger Zeit benötigt als bei der bisher üblichen Schwefelvulkanisation.

Das erfindungsgemäße Verfahren bringt darüber hinaus folgende Vorteile:
Starkes, gegebenenfalls völliges Zurückdrängen des Anfangspeaks der Rauchgasentwicklung beim Start der Einwirkung größer Zündquellen,
grundsätzliche zeitliche Verzögerung der Rauchgasentwicklung:
gleichmäßige Rauchgasdichte bei erniedrigtem Niveau
starkes, gegebenenfalls völliges Zurückdrängen der Rauchgasentwicklung nach Löschen der Flamme
Zurückdrängen der Entwicklung von HCl.

Dabei sind die so flammgeschützten Polyurethanschaumstoffe praktisch nicht-schmelzend.

Die erfindungsgemäß hergestellten Polyurethanschaumstoffe werden z.B. als Polstermaterial, vor allem in Fahrzeug- und Flugzeugsitzen, angewendet.

Die folgenden Beispiele erläutern die Erfindung:

### Ausführungsbeispiele

### Beispiel 1

Ein PUR-Schaumstoff, der in konventioneller Weise durch Umsetzung von Toluylendiisocyanat mit einem Polyetherpolyol einer OH-Zahl 56 in Gegenwart von Wasser als Treibmittel und üblichen Aktivatoren und Stabilisatoren hergestellt wurde, mit einem Raumgewicht von 20 kg/m³ und einer Schichtdicke von 13 mm wurde mit einer Mischung aus carboxyliertem Chloroprenlatex und Tetrazinkdodecarborat-Heptahydrat (2 ZnO · 3 B₂O₃ · 3,5 H₂O) im Verhältnis 1:2 zu 400 % seines Eigengewichts getränkt, so daß sich ein Schaumstoff mit einem Raumgewicht von 100 kg/m³ ergab. Für das verwendete Tränkmittel wurde nachstehende Rezeptur verwendet, wobei die jeweils genannten Teile sich auf die entsprechenden Gewichtsanteile Trockensubstanz beziehen:
100 Tle. carboxylierter Chloroprenlatex
200 Tle. Zinkborat
10 Tle. Chlorparaffin
15 Tle. Antimontrioxid
15 Tle. Zinkoxid
5 Tle. Melaminharz
Das eingesetzte Chlorparaffin dient dabei als Flammschutz für die entstehenden Pyrolysegase, wobei das Antimontrioxid diese Wirkung noch verstärkt; das Zinkoxid dient als Vernetzer für den Chloroprenlatex und das Melaminharz wird als zusätzliches Carbonisierungshilfsmittel verwendet.

Mit diesem mit vorstehender Rezeptur getränkten Schaumstoff wurde ein PUR-Weichschaumstoff, der ebenfalls in der oben beschriebenen Weise hergestellt worden ist, jedoch ein Raumgewicht von 45 kg/³ aufweist, ummantelt und gemäß der Prüfvorschrift für Fluggastsitze FAR 25 853 c geprüft, d.h. mit einem Kerosin-Brenner mit einer Flamme von 1035°C zwei Minuten lang aus einer Entfernung von 102 mm beflammt.

Nach Wegschwenken der Flamme ergab sich bei dem beflammten Polster ein Gesamtgewichtsverlust von lediglich 5,8 %, also erheblich weniger als der erlaubte Wert von 10 %. Ferner ergab sich kein Nachbrennen, kein Abtropfen von Schaumstoffschmelze und kein Durchbrennen der getränkten Schaumstoffschicht.

Für einen Vergleichsversuch wurde in obiger Rezeptur das Zinkborat durch die gleiche Menge Aluminiumhydroxid ersetzt.

Bezüglich der Rauchgasdichte wurden folgende Werte gemessen (Prüfvorschrift ATS 1000.001):

| Feststoff: | Rauchgasdichte | | |
|---|---|---|---|
| | nach 1 min. | Maximum | nach min. |
| Zinksalz | 57 | 136 | 7,8 |
| Alu-hydroxid (Vergleich) | 148 | 236 | 5,7 |

Das gleiche Material widerstand einem Bunsenbrenner länger als 30 min.

Daraus zeigt sich eindeutig, daß bei Verwendung des genannten Zinksalzes die Rauchgasdichte im Schnitt um mehr als die Hälfte niedriger liegt als bei bisher üblichen Feststoffen (Aluminiumhydroxid) und daß das Maximum der jetzt erheblich erniedrigten Rauchgasdichte auch erst 50 % später erfolgt. Damit wird also auch bei Verwendung eines so getränkten Schaumstoffs als Sitzpolyster in der Fluggastzelle eines Flugzeugs die vorher beschriebene Fluchtmöglichkeit erheblich verbessert.

### Beispiel 2

Ein 13 mm starkes PUR-Schaumstoffstück gemäß Beispiel 1, das in gleicher Weise wie unter Beispiel 1 getränkt wurde, wurde von einer Bunsenbrennerflamme mit einer Temperatur von über 1000°C aus einem Abstand von 15 mm beflammt. Der Schaumstoff widerstand der Flamme länger als 1 h, ohne durchzubrennen. Er erfüllte darüberhinaus auch die Rauchgasprüfung nach ATS 1000.001.

### Beispiel 3

Ein PUR-Schaumstoff gemäß Beispiel 1 wurde mit Polychloroprenlatx und dem Zinksalz im Verhältnis 1:3 getränkt, analog Beispiel 1 mit einem weiteren PUR-Schaumstoff ummantelt und entsprechend Beispiel 1 geprüft.

Der Gewichtsverlust betrug lediglich 4 %.

### Beispiel 4

Ein Schaumstoff entsprechend Beispiel 1 und einer Tränkung von Polychloroprenlatex und einem Zinksalz im Verhältnis 1:2 wurde in einer Dicke von 30 mm als Prüfkissen aus Vollmaterial der Prüfung nach FAR 25 853c unterzogen. Der Gesamtgewichtsverlust betrug 6 %.

Das gleiche Material widerstand einem Busenbrenner länger als 30 min.

Insgesamt ergibt sich also ein Schaumstoff mit einem überrangenden Brandverhalten, d.h. der Schaumstoff schmilzt auch bei einer großen Zündquelle und hoher Temperatureinwirkung nicht, er brennt nicht und die Enstehung von Pyrolysegasen wird weitgehend unterdrückt, so daß auch die Gefahr eines Flash-overs ausgeschlossen ist. Die Rauchgasentwicklung ist erheblich geringer und setzt insbesondere sehr viel später ein, während die physikalischen Werte gegenüber dem ungetränkten Schaumstoff zumindest erhalten bleiben. Dabei hat es sich u.a. ergeben, daß der Druckverformungsrest nur 4 % beträgt, d.h. die Eignung eines so behandelten Schaumstoffs als Sitzpolstermaterial ist gegenüber einem unbehandelten Schaumstoff praktisch nicht eingeschränkt oder verändert.

## Patentansprüche

1. Verfahren zur Hetstellung von schwerentflammbaren Polyurethanschaumstoffen durch Imprägnieren mit einer Mischung aus einem vernetzbaren Elastomerlatex und einem flammhemmenden Additiv, dadurch gekennzeichnet, daß man einen offenzeilligen Polyurethanschaumstoff mit einer Mischung aus einem Carboxylgruppen-haltigen Polychloroprenlatex, einem Zinksalz einer Polymetaborsäure und gegebenenfalls Aluminiumhydroxid imprägniert.

2. Verfahren gemäß Anspruch 1, dadurch gekennzeichnet, daß man einen offenzeilligen Polyurethanschaumstoff mit einer Porenzahl von 10-14/cm, einer Luftdurchlässigkeit von 50-150 l/min (gemessen über eine Fläche von 100 cm² bei einer Dicke von 5 cm und einem Druckabfall von 10 Pa) und einem Raumgewicht von 18-60 kg/m³ imprägniert.

3. Verfahren gemäß Anspruch 1 und 2, dadurch gekennzeichnet, daß vor dem Imprägnieren der Latex mit Zinkoxid als Vernetzer versetzt worden ist.

4. Verfahren nach Anspruch 1-3, dadurch gekennzeichnet, daß als Zinksalz Trizinktetraborat-Pentahydrat verwendet wird.

5. Verfahren nach Anspruch 1-3, dadurch gekennzeichnet, daß als Zinksalz Tetrazinkdodecaborat-Heptahydrat verwendet wird.

6. Verfahren nach Anspruch 1-5, dadurch gekennzeichnet, daß das Gew.-Verhältnis Polychloroprenlatex zu Zinksalz 1:1 bis 1:10, insbesondere 1:2 bis 1:4, beträgt.

7. Verfahren nach Anspruch 1, dadurch gekennzeichnet, daß der Chloroprenlatex mit dem Zinksalz als Feststoff in einer Menge von 50-500 Gew.-%, bezogen auf die Ausgangsrohdichte des Schaumstoffs, verwendet wird.

8. Verfahren nach Anspruch 1-7, dadurch gekennzeichnet daß Polychloropren mit 2 bis 6 Mol-% einpolymerisierten Einheiten von Acrylsäure oder Methacrylsäure verwendet wird.

9. Verfahren nach Anspruch 1-8, dadurch gekennzeichnet daß dem Zinksalz bis zu 50 Gew.-% durch Aluminium-Hydroxid ersetzt wird.

10. Verwendung der nach den Verfahren gemäß Anspruch 1 bis 9 erhaltenen Polyurethanschaumstoffe bei der Herstellung von Fahrzeug- und Flugzeugsitzen.

## Claims

1. A process for the production of flame-retardant polyurethane foams by impregnation with a mixture of a crosslinkable elastomer latex and a flame-retarding additive, characterized in that an open-cell polyurethane foam is impregnated with a mixture of a polychloroprene latex containing carboxyl groups, a zinc salt of a polymetaboric acid and, optionally, aluminium hydroxide.

2. A process as claimed in claim 1, characterized in that an open-cell polyurethane foam containing 10 to 14 pores/cm and having a permeability to air of 50 to 150 l/min. (as measured over an area of 100 cm² for a thickness of 5 cm and a pressure drop of 10 Pa) and a unit weight of 18 - 60 kg/m³ is impregnated.

3. A process as claimed in claims 1 and 2, characterized in that zinc oxide was added to the latex as crosslinking agent before impregnation.

4. A process as claimed in claims 1 to 3, characterized in that trizinc tetraborate pentahydrate is used as the zinc salt.

5. A process as claimed in claims 1 to 3, characterized in that tetrazinc dodecaborate heptahydrate is used as the zinc salt.

6. A process as claimed in claims 1 to 5, characterized in that the ratio by weight of polychloroprene latex to zinc salt is from 1:1 to 1:10 and more especially from 1:2 to 1:4.

7. A process as claimed in claim 1, characterized in that the chloroprene latex containing the zinc salt as solid is used in a quantity of 50 to 500% by weight, based on the initial density of the foam.

8. A process as claimed in claims 1 to 7, characterized in that polychloroprene containing 2 to 6 mole-% of copolymerized units of acrylic acid or methacrylic acid is used.

9. A process as claimed in claims 1 to 8, characterized in that up to 50% by weight of the zinc salt is replaced by aluminium hydroxide.

10. The use of the polyurethane foams obtained by the process claimed in claims 1 to 9 in the production of vehicle and aircraft seats.

## Revendications

1. Procédé de préparation de mousses de polyuréthannes ignifuges par imprégnation à l'aide d'un mélange d'un latex d'élastomère réticulable et d'un additif ignifigeant, caractérisé en ce que l'on imprègne une mousse de polyuréthanne à cellules ouvertes par un mélange d'un latex de polychloroprène contenant des groupes carboxyle, d'un sel de zinc d'un acide polymétaborique et le cas échéant d'hydroxyde d'aluminium.

2. Procédé selon la revendication 1, caractérisé en ce que l'on imprègne une mousse de polyuréthanne à cellules ouvertes, à un nombre de pores de 10 à 14/cm, ayant une perméabilité à l'air de 50 à 150 l/min (mesurée sur une surface de 100 cm² à une épaisseur de 5 cm avec une chute de pression de 10 Pa) et une densité apparente de 18 à 60 kg/m³.

3. Procédé selon les revendications 1 et 2, caractérisé en ce que, avant l'imprégnation, on ajoute au latex de l'oxyde de zinc qui sert d'agent réticulant.

4. Procédé selon les revendications 1 à 3, caractérisé en ce que le sel de zinc utilisé est le tétraborate de trizinc pentahydraté.

5. Procédé selon les revendications 1 à 3, caractérisé en ce que le sel de zinc utilisé est le dodécaborate de tétrazinc heptahydraté.

6. Procédé selon les revendications 1 à 5, caractérisé en ce que les proportions relatives en poids entre le latex de polychloroprène et le sel de zinc sont de 1:1 à 1:10, plus spécialement de 1:2 à 1:4.

7. Procédé selon la revendication 1, caractérisé en ce que le latex de chloroprène, avec le sel de zinc en tant que matière solide, est utilisé en quantité de 50 à 500 % en poids par rapport à la densité apparente initiale de la mousse.

8. Procédé selon les revendications 1 à 7, caractérisé en ce que l'on utilise un polychloroprène contenant 2 à 6 mol% de motifs copolymérisés d'acide acrylique ou d'acide méthacrylique.

9. Procédé selon les revendications 1 à 8, caractérisé en ce que l'on remplace le sel de zinc en proportions allant jusqu'à 50% en poids par de l'hydroxyde d'aluminium.

10. Utilisation des mousses de polyuréthannes obtenues par un procédé selon les revendications 1 à 9 pour la fabrication de sièges de véhicules et d'avions.
